# EUROPEAN PATENT APPLICATION

(11) **EP 4 685 718 A1**
(43) Date of publication of application: **28.01.2026**
(21) Application number: 25191989.0
(22) Date of filing: 25.07.2025
(51) Int. Cl.: G06Q 10/087, G01G 17/04, G01G 19/42, G06F 11/07, G06F 17/18, G06N 20/00, G06Q 30/00, G07F 9/02, H04W 4/38

(54) **SYSTEM WITH SENSORS AND EDGE ALGORITHMS FOR DETERMINING USAGE OF CONSUMABLE PRODUCTS**

(30) Priority: 25.07.2024 CA 3249827
(71) Applicant: The Procter & Gamble Company, Cincinnati, OH 45202 (US)
(72) Inventor: BAUER, Matthew Stephen, Cincinnati, 45202 (US); LEWIS, Cody Dylan, Cincinnati, 45202 (US); JOYCE, Jonathan Livingston, Cincinnati, 45202 (US); PARK, Ye Ji, 61476 Kronberg (DE); CHOUDHARY, Ankur Kumar, 61476 Kronberg (DE); CHANG, Su Yon, Cincinnati, 45202 (US)
(74) Representative: P&G Patent Belgium UK

(57) **Abstract**

A system for determining usage of a consumable product includes a device assembly to receive the consumable product, and a server. The device assembly includes sensors to collect raw sensor data during sample time periods, and a controller to execute edge algorithms based on the collected raw sensor data. The edge algorithms summarize the raw sensor data collected during the sample time periods to single edge algorithm outputs. The server analyzes the single edge algorithm outputs to make a determination on the usage and consumption of the consumable product. To obtain a higher degree of confidence in performance of the edge algorithms, the server independently analyzes the raw sensor data. As refinements are made to the edge algorithms, the confidence of the edge algorithms is increased. Updated versions of the device assembly are simplified so that a minimal amount of raw sensor data is reported.

## Description

### FIELD

The present disclosure relates to systems, and, more specifically to a system with sensors and edge algorithms that is capable of detecting and reporting usage of consumable products by a consumer with a high degree of confidence.

### BACKGROUND

Manufacturers can benefit from information that indicates usage and consumption of consumable products. The consumable products may be dish care products, household cleaning products, laundry and fabric care products and personal cleaning products, for example.

One way for manufacturers to obtain usage and consumption information of these consumable products is by conducting research studies, for example. However, such studies are typically ineffective because they provide usage and consumption information during a particular point in time rather than over a long period of time that can better indicate actual usage and consumption. Moreover, consumer feedback on usage and consumption of the product may not be accurate when compared to actual usage and consumption.

A system for obtaining consumption information is provided by U.S. Patent No. 11,403,651. The system includes a device for receiving a consumer product, wherein the device includes a sensor module for sensing a weight of the consumer product corresponding to use of the consumer product. The sensor module includes a time sensor to observe the time at which the consumer product is used, and generates time consumed data based on the observed time. A communication module is in communication with the sensor module, and is configured to wirelessly transmit data about the use of the consumer product based on the sensed weight changes in the consumer product. Nonetheless, there is still a need to improve upon such a system that collects and reports usage and consumption information of a consumable product, particularly with respect to having a high degree of confidence in the reported information.

The discussion of shortcomings and needs existing in the field prior to the present disclosure is in no way an admission that such shortcomings and needs were recognized by those skilled in the art prior to the present disclosure.

### SUMMARY

The systems, devices and methods of the present disclosure may be useful for determining usage of consumable products by a consumer with a high degree of confidence in the received data. A device assembly may be configured to receive a consumable product positioned thereon. The device assembly may include sensors to collect raw sensor data during sample time periods and may include a controller to execute edge algorithms that may be based on the collected raw sensor data. The edge algorithms may summarize the raw sensor data collected during the sample time periods to single edge algorithm outputs. A server may analyze the single edge algorithm outputs and may make a determination on the usage and consumption of the consumable product. To obtain a higher degree of confidence in performance of the edge algorithms, the server may independently analyze the raw sensor data. As refinements may be made to the edge algorithms, the confidence of the edge algorithms may increase. Updated versions of the device assembly may be simplified so that a minimal amount of raw sensor data may be reported.

A system for determining usage of a consumable product may include the device assembly to receive the consumable product when placed thereon, and the server. The device assembly may include sensors to collect raw sensor data during sample time periods, where the raw sensor data may comprise a plurality of data points within each sample time period for each sensor. A controller may be coupled to the sensors and may be configured to execute edge algorithms based on the collected raw sensor data for each sample time period. Each edge algorithm may summarize the raw sensor data from at least one of the sensors as a single edge algorithm output. A communication module may be coupled to the controller and may be configured to transmit the raw sensor data and the single edge algorithm outputs for each sample time period.

The server may include a memory to store the raw sensor data and the single edge algorithm outputs for each sample time period. The server may also include a processor that may make a determination on the usage of the consumable product based on the single edge algorithm outputs for each sample time period. The processor may also analyze the raw sensor data for each sample time period to evaluate confidence of the single edge algorithm outputs.

The device assembly includes a power source that may be at least one of a replaceable battery, a rechargeable battery, and a power cord with an electrical plug. The device assembly may further include an antenna that may be configured to charge the rechargeable battery via capturing radio frequency (RF) signals from an ambient environment. The sensors may include at least one of a weight sensor, a temperature sensor and a battery sensor.

The raw sensor data that may be collected by the temperature sensor and the battery sensor may be used as indicators by the edge algorithms to determine if the raw sensor data collected by the weight sensor is to be discarded.

The edge algorithms may include at least one secondary edge algorithm that may assess statistical variances of the raw sensor data to determine if an error code is to be generated to create awareness of a problem.

Each of the edge algorithms may be configured to perform a mathematical calculation on the raw sensor data that may be received for each sample time period to generate one of the single edge algorithm outputs. The mathematical calculations may include at least one of determining a delta from a previous measurement, an average of measurements during the sample time period, and a sigma average that may be a standard deviation of a last measurement.

The edge algorithms may include at least one of a weight delta analysis model that may determine a change in weight of the consumable product from a previous measurement, a weight average model that may determine an average of the weight measurements during each sample time period, a sigma weight average model that may determine a standard deviation of a last measurement, and a tare weight model that may determine a weight value when the consumable product is removed from the device assembly.

The sensors may further include a motion sensor, and the edge algorithms may further include a motion threshold model that may determine if a motion limit value of the device assembly has been exceeded.

The server may be configured to send updates to the edge algorithms that may be based on the analyzed raw sensor data to improve confidence of the single edge algorithm outputs.

The device assembly may include at least one memory with first and second memory sections, with the first memory sections that may store the edge algorithms and the second memory sections that may store the updated edge algorithms. The controller may be further configured to verify operation of the updated edge algorithms in the second memory sections before using the updated edge algorithms.

The system may further include a gateway that may receive the raw sensor data and the single edge algorithm outputs from the device assembly and may transmit the received raw sensor data and the single edge algorithm outputs to the server.

The device assembly may further include a communication module that may be configured to transmit the raw sensor data and the single edge algorithm outputs directly to the server.

The device assembly may be further configured to communicate with a client device that may comprise a survey app including pre-deployed survey questions, where the pre-deployed survey questions may be triggered by the device assembly in response to at least one of the edge algorithm outputs satisfying specific criteria, such as a weight change in the consumable product.

The server may be further configured to transmit at least one survey question to a client device in response to at least one of the edge algorithm outputs that may satisfy specific criteria, such as a weight change in the consumable product.

Another aspect may be directed to a device assembly as described above. The device assembly may include a housing having upper and lower edge sections with a transition section therebetween. The upper edge section may be recessed from the lower edge section. A bottom cover may be coupled to an underside of the housing. A top plate may extend over a topside of the housing and may overhang a portion of the transition section of the housing, with the top plate that may receive a consumable product and may be movable with respect to the housing. A weight sensor may be positioned within an interior of the housing and may contact the top plate for collecting weight measurements during sample time periods. A controller may be coupled to the weight sensor and may be configured to execute at least one edge algorithm that may be based on the collected weight measurements for each sample time period, with the at least one edge algorithm that may summarize the weight measurements as a single edge algorithm output for each sample time. A communication module may be coupled to the controller and may be configured to transmit the single edge algorithm output for each sample time period.

Another aspect may be directed to a method of determining usage of a consumable product with the above-described system. The method may include providing a device assembly. The device assembly may be operated to collect raw sensor data with the consumable product placed thereon during sample time periods. The raw sensor data may include a plurality of data points within each sample time period for each sensor. A plurality of edge algorithms may be executed based on the collected raw sensor data for each sample time period. Each edge algorithm may summarize the raw sensor data from at least one of the sensors as a single edge algorithm output. A communication module may be within the device assembly and may transmit the raw sensor data and the single edge algorithm outputs for each sample time period. The method may further include operating the server to store the raw sensor data and the single edge algorithm outputs for each sample time period. The single edge algorithm outputs for each sample time period may be analyzed to make a determination on the usage of the consumable product. The raw sensor data for each sample time period may be analyzed to evaluate confidence of the single edge algorithm outputs.

Another aspect may be directed to a method of prompting a consumer on a recommended sequence of use for a plurality of consumable products. The method may include providing a device assembly, where the device assembly may detect when a first consumable product is lifted off the device assembly indicating usage of the first consumable product. The device assembly may send a first message as part of usage sequence directions to a survey app on a client device which may provide directions to the consumer who may use a second consumable product after use of the first consumable product. The device assembly may receive sensor data from a sensor in a second consumable product which may indicate usage of the second consumable product by the consumer. The device assembly may send a second message as part of the usage sequence directions to the survey app on the client device which may provide directions to the consumer who may use a third consumable product after use of the second consumable product. The device assembly may receive sensor data from a sensor in the third consumable product which may indicate usage of the third consumable product by the consumer. The device assembly may send a survey request message to the survey app in the client device which may prompt the consumer to provide survey feedback on usage of the first, second and third consumable products.

Another aspect may be directed to a method of detecting conformance with a recommended sequence of use for a plurality of consumable products. The method may include providing a first device assembly. A first weight of a first consumable product package may be detected. The first consumable product package may include a first consumable product that may be positioned on the first device assembly. A first time at which the first consumable product package is lifted off the first device assembly may be detected that may indicate a usage of the first consumable product. A second time at which the first consumable product package is returned to the first device assembly may be detected. A second weight of the first consumable product package may be is detected. A first amount of the first consumable product consumed during the usage of the first consumable product may be calculated and may be based on the first weight and the second weight. The first amount may be compared to a first recommended usage amount for the first consumable product which may produce a first usage amount comparison.

A second device assembly may be provided. A third weight of a second consumable product package positioned on the second device assembly may be detected. The second consumable product package may include a second consumable product. A third time at which the second consumable product package is lifted off the second device assembly may be detected that may indicate a usage of the second consumable product. A fourth time at which the second consumable product package is returned to the second device assembly may be detected. A fourth weight of the second consumable product package may be detected. A second amount of the second consumable product consumed during the usage of the second consumable product may be calculated that may be based on the third weight and the fourth weight. The second amount may be compared to a second recommended usage amount for the second consumable product which may produce a second usage amount comparison.

The first time may be compared with the third time which may determine whether the first consumable product and the second consumable product were used according to a recommended sequence which may produce a sequence comparison. A workflow conformance analysis comprising the first usage amount comparison, the second usage amount comparison, and the sequence comparison may be reported.

These and other features, aspects, and advantages of various embodiments will become better understood with reference to the following description, figures, and claims.

### BRIEF DESCRIPTION OF THE DRAWINGS

Many aspects of this disclosure can be better understood with reference to the following figures, which illustrate examples according to various embodiments.
FIG. 1 is a schematic diagram of a system that may include sensors and edge algorithms for determining usage of consumable products in which various aspects of the disclosure may be implemented.
FIG. 2 is a sequence of collecting weight measurements from the device assembly illustrated in FIG. 1.
FIG. 3 is a first dashboard screen shot of sensor data that may be analyzed by the cloud-based server illustrated in FIG. 1.
FIG. 4 is a second dashboard screen shot of sensor data that may be analyzed by the cloud-based server illustrated in FIG. 1.
FIG. 5 is an exploded view of the device assembly illustrated in FIG. 1.
FIG. 6 is a topside view of the printed circuit board illustrated in FIG. 1.
FIG. 7 is a cross-sectional view of the device assembly illustrated in FIG. 1.
FIG. 8 is a closeup view of the switch illustrated in FIG. 7 that may be mounted to the load plate.
FIG. 9 is a bottom perspective view of the device assembly illustrated in FIG. 1.
FIG. 10 is a bottom perspective view of the device assembly illustrated in FIG. 1 with the bottom cover removed.
FIG. 11 is a flowchart of a method that may determine usage of a consumable product with the system illustrated in FIG. 1.
FIG. 12 is a schematic diagram of the system illustrated in FIG. 1 that may be configured to prompt a consumer on a recommended sequence of use of consumable products.
FIG. 13 is a flowchart of a method that may prompt a consumer on a recommended sequence of use of consumable products with the system illustrated in FIG. 12.
FIG. 14 is a schematic diagram of the system illustrated in FIG. 1 that may be configured to detect conformance with a recommended sequence of use for consumable products.
FIGS. 15A-15B are a flowchart of a method that may detect conformance with a recommended sequence of use for consumable products with the system illustrated in FIG. 14.

It should be understood that the various embodiments are not limited to the examples illustrated in the figures.

### DETAILED DESCRIPTION

### Introduction and Definitions

This disclosure is written to describe the invention to a person having ordinary skill in the art, who will understand that this disclosure is not limited to the specific examples or embodiments described. The examples and embodiments are single instances of the invention which will make a much larger scope apparent to the person having ordinary skill in the art. Unless defined otherwise, all technical and scientific terms used herein have the same meaning as commonly understood by the person having ordinary skill in the art. It is also to be understood that the terminology used herein is for the purpose of describing examples and embodiments only, and is not intended to be limiting, since the scope of the present disclosure will be limited only by the appended claims.

This disclosure is written to describe the invention to a person having ordinary skill in the art, who will understand that this disclosure is not limited to the specific examples or embodiments described. The examples and embodiments are single instances of the invention which will make a much larger scope apparent to the person having ordinary skill in the art. Unless defined otherwise, all technical and scientific terms used herein have the same meaning as commonly understood by the person having ordinary skill in the art. It is also to be understood that the terminology used herein is for the purpose of describing examples and embodiments only, and is not intended to be limiting, since the scope of the present disclosure will be limited only by the appended claims.

All the features disclosed in this specification (including any accompanying claims, abstract, and drawings) may be replaced by alternative features serving the same, equivalent, or similar purpose, unless expressly stated otherwise. Thus, unless expressly stated otherwise, each feature disclosed may be one example only of a generic series of equivalent or similar features. The examples and embodiments described herein are for illustrative purposes only and that various modifications or changes in light thereof will be suggested to the person having ordinary skill in the art and are to be included within the spirit and purview of this application. Many variations and modifications may be made to the embodiments of the disclosure without departing substantially from the spirit and principles of the disclosure. All such modifications and variations are intended to be included herein within the scope of this disclosure. For example, unless otherwise indicated, the present disclosure is not limited to particular materials, reagents, reaction materials, manufacturing processes, or the like, as such can vary. It is also to be understood that the terminology used herein is for purposes of describing particular embodiments only and is not intended to be limiting. It is also possible in the present disclosure that steps can be executed in different sequences where logically possible.

All numeric values are herein assumed to be modified by the term "about," whether or not explicitly indicated. The term "about" generally refers to a range of numbers that one of skill in the art would consider equivalent to the recited value (for example, having the same function or result). In many instances, the term "about" may include numbers that are rounded to the nearest significant figure.

In everyday usage, indefinite articles (like "a" or "an") precede countable nouns and noncountable nouns almost never take indefinite articles. It must be noted, therefore, that, as used in this specification and in the claims that follow, the singular forms "a," "an," and "the" include plural referents unless the context clearly dictates otherwise. Thus, for example, reference to "a sensor" includes a plurality of sensors. Particularly when a single countable noun is listed as an element in a claim, this specification will generally use a phrase such as "a single." For example, "a single edge algorithm output."

Where a range of values is provided, it is understood that each intervening value, to the tenth of the unit of the lower limit (unless the context clearly dictates otherwise), between the upper and lower limit of that range, and any other stated or intervening value in that stated range, is encompassed within the disclosure. The upper and lower limits of these smaller ranges may independently be included in the smaller ranges and are also encompassed within the disclosure, subject to any specifically excluded limit in the stated range. Where the stated range includes one or both of the limits, ranges excluding either or both of those included limits are also included in the disclosure.

In this specification and in the claims that follow, reference will be made to a number of terms that shall be defined to have the following meanings unless a contrary intention is apparent.

"Disposed on" or "carried by" may refer to a positional state indicating that one object or material is arranged in a position adjacent to the position of another object or material. The term does not require or exclude the presence of intervening objects, materials, or layers.

"Module" may refer to software instructions and codes to perform a designated task or a function. A module may be a software module or a hardware module. A software module may include one or more software routines. A hardware module may be a self-contained component with an independent circuitry that may perform various operations described herein.

"Controller" may refer to a computing context and may be a hardware device or a software program that may manage or direct the flow of data between two entities. In general, a controller may include a processor to interface between two or more devices and may manage communications between them.

"Edge algorithm" refers to a computational process or set of rules designed to run on edge devices, which are computing units located at the periphery of a network, closer to the source of data generation rather than in centralized cloud data centers. Edge algorithms, used according to various embodiments, may be optimized for low latency, efficient power consumption, and minimal data transmission requirements. These algorithms may often involve real-time data processing, decision-making, and actuation to support various applications such as determining usage of consumable products. Edge algorithms may comprise one or more programmatic models, and the edge algorithm itself may be referred to as a model. Each edge algorithm may be iteratively trained or derived based on the raw sensor data received by that algorithm during a sample time period.

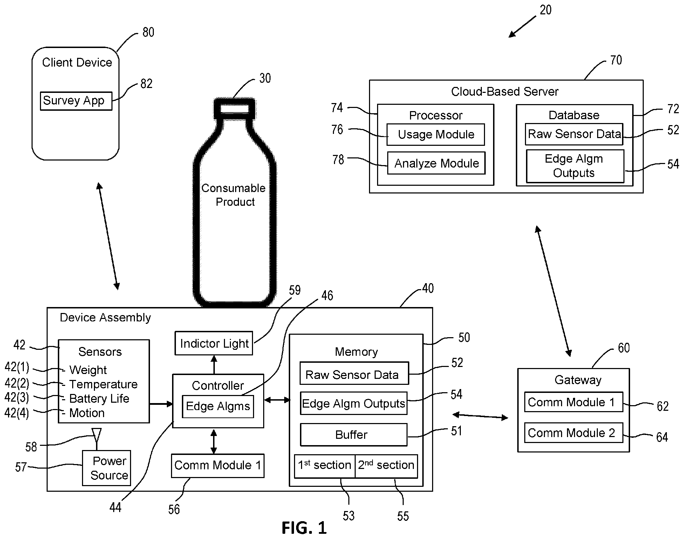

Referring initially to FIG. 1, a system **20** that may include sensors **42** and edge algorithms **46** that may be used for determining usage of consumable products **30** by a consumer with a high degree of confidence will be discussed. The consumer may be one of many consumers participating in a marketing survey that may be conducted by manufacturers of the consumable products **30.**

The consumable products **30,** for example, may be dish care products, household cleaning products, air fresheners, laundry care products, fabric care products, personal cleaning products, personal grooming products, nutritional products, and the like. Information on usage and consumption of a consumable product **30** may advantageously be used by a manufacturer of the consumable product **30.** Qualitative information may be obtained when consumer sentiment matches up with actual usage of the consumable product **30.**

The system **20** may include a device assembly **40,** a gateway **60,** and a cloud-based server **70.** The device assembly **40** may receive a consumable product **30** placed thereon, and the gateway **60** may be close proximity to the device assembly **40.** The device assembly **40** and the gateway **60** may be placed in the consumer's residence. The gateway **60** may plug into an electrical output for power, and the device assembly **40** may include a power source **57.** The power source **57** may be, for example, a replaceable battery, a rechargeable battery, or a power cord with an electrical plug. The device assembly **40** may further include an antenna **58** that may be configured to charge the rechargeable battery via capturing radio frequency (RF) signals from an ambient environment. The gateway **60** may relay communications that may be exchanged between the device assembly **40** and the cloud-based server **70,** and vice-versa.

The device assembly **40** may include one or more sensors **42,** and a controller **44** that may be coupled to the one or more sensors **42.** The sensors **42** may collect raw sensor data during sample time periods. The raw sensor data may also be referred to as data points. A sample time period may be between 5 - 10 seconds, for example, where 50 - 100 data points are collected at a 10 Hz sampling rate.

The controller **44** may be configured to execute a plurality of edge algorithms **46,** as will be discussed in greater detail below. The edge algorithms **46** may summarize the raw sensor data (i.e., data points) **52** that may be collected during each sample time period to one or more single data point outputs. Each of the single data outputs may represent a summary of one or more raw sensor data points. For example, the 50 - 100 data points that may be collected by a sensor **42** may be summarized as a single data point output. The one or more single data point outputs may be referred to as edge algorithm outputs **54.**

The use of edge algorithms **46** may allow a large number of data points which may be collected by the sensors **42** during the sample time periods. By summarizing the data points that may be done by averaging or determining a standard deviation, only one summary data point may be output during each sample time period for an edge algorithm **46.** The edge algorithms **46** may not be processor intensive nor may they take up much memory space, both of which are limited on a battery-operated device assembly **40.**

The controller **44** may further be configured to execute one or more algorithms addressing hysteresis. Scales may generally not be configured for constant loading. Additionally, scales may generally not be designed for accurate measurement of removed weight after extended loading times. So, as an example where an initial weight of a consumable product **30** may have an initial weight of 100 grams, after use, the weight of the consumable product may be 70 grams. However, because the scale was loaded for an extended period of time, it may provide data that shows that the weight of the consumable product may be 60 grams after use, and further, if multiple placement and removal events happen in quick succession, each replacement weight event may have significant variance from true mass. Algorithms may be executed by the controller **44** which may alleviate hysteresis of the device assembly **40** of the present disclosure. Because of the unique use of the device assembly **40** of the present disclosure, calibration may be of importance. Calibration of the device assembly **40** of the present disclosure may take into account the gradual unloading of the device. Specifically, as the consumable product **30** being measured is consumed, less weight may be provided on the device assembly **40.** Calibration of conventional load cells is designed for loading from zero applications which may result in hysteresis of the device assembly **40** while unloading.

The cloud-based server **70** may be configured to receive, via the gateway **60,** the raw sensor data **52** that may be collected during each sample time period, and the corresponding edge algorithm outputs **54** may summarize the raw sensor data **54.** The raw sensor data **52** and the edge algorithm outputs **54** may be stored in a database **72** within the cloud-based server **70.** A processor **74** within the cloud-based server **70** may include a usage module **76** that may make determinations on the usage and consumption of the consumable product **30** that may be based on the edge algorithm outputs **54.**

The processor **74** may also include an analyze module **78** that may independently analyze the raw sensor data **52.** The analyze module **78** may operate in an iterative model training mode which may evaluate performance of the edge algorithms **46** in view of the raw sensor data **52.** Even though the cloud-based server **70** is illustrated with a single processor **74,** typically there may be multiple processors that may perform the functions of the usage module **76** and the analyze module **78.**

There is an advantage of the analyze module **78** to independently analyze the raw sensor data **52** since there may be uncertainty on the trustworthiness of the edge algorithm outputs **54.** This may be a result of the edge algorithms **46** being initially trained with raw sensor data **52** that may not yet have been processed by the edge algorithms **46.**

To address this uncertainty, the processor **74** may independently analyze the raw sensor data **52** which may serve as a continuous feedback loop. This feedback loop advantageously allows performance of the edge algorithms **46** to be evaluated. The objective may be to collect enough raw sensor data from enough situations to see all the ways that the edge algorithms **46** may fail. If improvements can be made to the edge algorithms **46,** then the cloud-based server **70** may then send updates to the edge algorithms **46** via the gateway **60** which in turn may increase confidence in the edge algorithm outputs **54.**

After a sufficient number of iterative refinements have been made to the edge algorithms **46,** then the confidence of the edge algorithm outputs **54** may be considered to be very high. Consequently, there may be less of a need to continue to evaluate the raw sensor data **52** independently. Updated versions of the device assembly **40** may be simplified so that a minimal amount of data may be reported. The minimal amount of data may be weight measurements of the consumable product **30** and a standard deviation of the weight measurements. Thus, updated versions of the device assembly **40** might include a simplified weight difference edge model that simply reports a difference between measured weights, and/or an anomaly edge algorithm, where the anomaly edge algorithm may indicate that the weight difference data should not be trusted. However, the device assembly **40** may still have the capability to execute the other edge algorithms and report more raw sensor data if requested by the cloud-based server **70.** The device assembly **40** may receive an enter raw sensor data transmit mode command. The cloud-based server **70** may be configured to remotely activate this feature of the device assembly **40** if desired.

The creation of an edge algorithm **46** may require raw sensor data **52** that have not yet been processed by the edge algorithm **46,** and data labels that may enable one to train a math model or derive an algorithm which isolates or extracts the knowledge features of interest. Data labels may be markers of ground truth on specific time points of the raw sensor data **52.**

As an example, a weight sensor **42(1)** may at times indicate a weight change. With the ground truth labels, the developers of the system **20** may determine that some of the weight changes are based on real usage of the consumable product **30,** and at other times are not. The developers may then train a math model to recognize the distinctive differences between usage and noise.

Each edge algorithm **46** may also be referred to as a model, and may be trained or derived to perform a mathematical-type calculation that may be based on the raw sensor data **52** received by that algorithm during the sample time period. Example mathematical type calculations may include, for example, determining a delta from a previous measurement, an average of the measurements during the sample time period, or a sigma average which is a standard deviation of the last measurement.

Training the edge algorithms **46** may require an iterative refinement since the corresponding models may not be accurate under all the possible situations to which the device assembly **40** may be subjected. On an initial release of an edge algorithm **46,** it may be impractical for the developers to collect enough raw sensor data **52** from enough situations to see all the ways that a model may fail. Thus, part of the process of deploying an edge algorithm is for developers to study ways that the model fails the first time, and then improve or refine the edge algorithm or the models that make it up based on knowledge gleaned be collecting a large amount of additional supporting information.

By continuing to collect the supporting information on an ongoing basis (i.e., as a feedback loop), this may advantageously be used to indicate when a model should not be trusted. For the developers to have a release cycle where performance of the edge algorithms **46** may be continually improved over time, then the developers may try to build in features that repeat the original training of the model in different situations that may be encountered in the future.

The illustrated sensors **42** may include the weight sensor **42(1),** a temperature sensor **42(2),** and a battery life sensor **42(3).** Optionally, a motion sensor **42(4)** may be included which may determine acceleration and orientation of the device assembly **40.** The motion sensor **42(4)** may include at least one of an orientation sensor and an accelerometer. Weight data that may be collected during movement of the device assembly **40** may be discarded or flagged with an error code, and weight data collected while the device assembly **40** is on an incline may also be discarded or flagged with an error code. The one or more sensors **42(1)-42(4)** may be generally referred to as sensors **42.** The sensors **42** may provide the raw sensor data **52** to the controller **44** during the sample time periods.

The edge algorithms **46** may include a number of different type algorithms. A weight delta analysis algorithm may be used to determine a weight change from a previous weight measurement. A weight average algorithm may be used to average X weight measurements over X sample time periods. A sigma weight average algorithm may determine a standard deviation of the last measurement. A tare weight algorithm may provide a collection of sensor values when zero weight is on the weight sensor **42(1).** A sigma tare weight algorithm may determine a standard deviation of the last tare measurement. A motion threshold model may determine if a motion limit threshold has been exceeded, as determined by the motion sensor **42(4).**

Each edge algorithm **46** may receive the raw sensor data **52** over the sample period from at least one of the sensors **42** and may condense the raw sensor data (i.e., data points) **52** over the sample time period to a single edge algorithm output **54.** A sample time period may be between 5 - 10 seconds, for example, where 50 - 100 data points are collected at a 10 Hz sampling rate. The number of data points that may be collected during the sample time period can be increased by increasing the sampling rate.

A sample time period may be initiated a number of different ways. One way to initiate the sample time period may be for the device assembly **40** to wake up in response to the consumable product **30** that may be lifted off the device assembly **40** or may be moved relative to the device assembly 40. Another way to initiate the sample time period may be for the device assembly **40** to initiate a timed wakeup. This may occur every 5 minutes, for example. Yet another way to initiate the sample time period may be for the motion sensor **42(4)** to detect that the device assembly **40** is being moved. The edge algorithms **46** may include a motion threshold model that may be used to determine if the motion limit threshold value of the device assembly **40** has been exceeded. The device assembly **40** may also report how the sample time periods were initiated, which may be received by the cloud-based server **70.**

It is worth noting that for lighter weights, more frequent checks may be utilized. For example, the sample time period may occur every 3 minutes.

The edge algorithms **46** may run the raw sensor data **52** through a mathematical equation that may generate the respective single edge algorithm outputs **54.** The mathematical equation may be, for example, as straightforward as determining a delta from a previous measurement, or an average of the measurements during the sample time period, or a sigma average which is a standard deviation of the last measurement. As another example, the edge algorithms **46** may be as complex as training a machine learning model that may receive the raw sensor data **52** over the sample time period and may predict the respective edge algorithm outputs **54.**

The controller **44** may be coupled to a non-volatile memory **50** and may store the received raw sensor data **52** and the edge algorithm outputs **54** in the memory **50.** The memory **50** may be a flash memory. The controller **44** may also provide the raw sensor data **52** and the edge algorithm outputs **54** to a communication module **56** which may be configured to transmit the raw sensor data **52** and the edge algorithm outputs **54** to a corresponding communication module **62** in the gateway **60.**

The communication modules **56, 62** may operate based on a short-range wireless technology standard, such as Bluetooth. The gateway **60** may include a second communication module **64** that may be configured to relay the raw sensor data **52** and the edge algorithm outputs **54** to the cloud-based server **70.** The second communication module **64** may be cellular-based.

There are a number of advantages of the device assembly **40** communicating with the gateway **60** using Bluetooth messages. One advantage may be that the battery life of the coaster assembly **40** is extended. Another advantage may be that the device assembly **40** can receive time references so that the clock in the device assembly **40** may be be reset to the current time. Otherwise, the clock would typically drift over time. Since the Bluetooth messages are time-stamped, this provides an accurate time reference to when the consumer is using the consumable product 30.

The device assembly **40** may communicate with the gateway **60** using any suitable communication protocol. Low power communication protocols may include Bluetooth, Bluetooth low energy, lora, thread, zigbee, and the like, and are preferable as they can extend battery life. Higher power communication protocols which may similarly be utilized are Wi-Fi and cellular. Where the device assembly **40** has the capability of being plugged into a wall outlet, any suitable communication protocol may be utilized. As an alternative to the communication modules **56, 62** being configured as Bluetooth modules, the communication modules **56, 62** may be configured as Wi-Fi modules. Wi-Fi is a wireless network protocol that may be commonly used for local area networking of devices and internet access, which may allow nearby digital devices to send and receive messages. Wi-Fi modules may commonly be used in the field of Internet of things (IoT).

The gateway **60** may also be able to provide updates from the cloud-based server **70** to the device assembly **40.** For example, updates may be provided to the edge algorithms **46** which may increase the confidence of the edge algorithm outputs **54.** The edge algorithms **46** may be stored in a first memory section **53** of the memory **50,** whereas updates to the edge algorithms **46** may be stored in a second memory section **55** of the memory **50.** The controller **44** may be configured to verify operation of the updated edge algorithms in the second memory section **55** before using the updated edge algorithms. As another example, the communication module **56** may receive at least one of over the air firmware updates from the cloud-based server **70,** cloud functions, e.g., change of sample time intervals from 5 minutes to 10 minutes, and time clock updates.

The gateway **60** may also be able to provide commands from the cloud-based server **70** to the device assembly **40.** The commands may include turning the device assembly **40** off, initiating recalibration or changing the calibration curve of the device assembly **40,** or activate/deactivate software features within the device assembly **40.**

The software features may be used to increase or decrease the amount of raw sensor data **52** that may be collected by the sensors **42** and may be processed by the edge algorithms **46.** This may allow the device assembly **40** to be configured to operate in the iterative model training mode or in a trustworthy confidence mode. In the iterative model training mode, the raw sensor data **52** may be needed by the cloud-based server **70** to evaluate performance of the edge algorithm outputs **54.** In the trustworthy confidence mode, a sufficient number of refinements may have been made to the edge algorithms **46** so that the raw sensor data **52** provided to the cloud-based server **70** may be significantly reduced.

The system **20** of the present disclosure may utilize cellular communication protocols. For example, the communication module **56** in the device assembly **40** may be replaced by the cellular communication module **64** in order to do away with the gateway **60** by communicating directly with the cloud-based server **70.** The cellular communication module **64** may also be referred to as a SIM module. Doing away with the gateway **60** is a tradeoff on the device assembly **40** using more power to operate with the cellular communication module **64.** Consequently, the batteries may need to be replaced more often, which may require reminders to be sent to the consumer to change the batteries. This in turn may increase the level of supervision needed during the marketing survey. Another tradeoff may be that transmitting cellular-based data may be more costly than transmitting Bluetooth messages.

The gateway **60** may be configured to plug into a wall socket. As such any suitable communication protocol may be utilized for communication between the gateway **60** and the cloud-based server **70.** The gateway **60** may be any suitable device. Some examples may include smart phones, Oral-B powered toothbrushes that have communication capability, Apple^{®} TV, and the like. It is worth noting that to utilize Apple^{®} TV as the gateway, the communication protocol between the device(s) and the gateway **60** may need to be thread. If the device assembly **40** cannot establish communications with the gateway **60** or with the cloud-based server **70** when operating with a cellular communication module, then the raw sensor data **52** and the edge algorithm outputs **54** may be placed in a buffer **51** until communications is re-established. The buffer **51** may be a ring buffer, for example, that may reuse the memory when needed and may be pre-allocated so it may be ready to be used and may be written as soon as it is needed.

During the initial training of the edge algorithms **46,** close attention may be paid to the raw sensor data **52** provided by sensors **42(2)-42(4)** and to secondary edge algorithms **46** operating in the device assembly **40.** The raw sensor data **52** that may be provided by sensors **42(2)-42(4)** may be a good indicator of times when a first release of the edge algorithms **46** may fail or may produce bad information.

Good indicators of bad data may include temperature, battery life and motion. When the temperature changes rapidly, this may cause the weight sensor **42(1)** to drift. When a battery fails, the weight sensor **42(1)** may still operate but in a non-optimal voltage regime, ruining the calibration offset assumptions. When the device assembly **40** is moving, the weight sensor **42(1)** may not measure accurately.

As an example, the device assembly **40** may require 5 volts and above to provide accurate data. Below 5 volts, the weight sensor **42(1),** along with other components within the device assembly **40** may still operate; however, the data being obtained by the device assembly **40** may not have the reliability of data obtained at the appropriate voltage.

Temperature data collected by the temperature sensor **42(2)** may be used to initiate recalibration of the weight sensor **41(1).** Temperature changes associated with the device assembly **40** may cause the weight sensor **41(1)** to drift which may lead to an error in the weight measurement. One or more of the edge algorithms **46** may be modeled to correlate drift of the weight sensor **41(1)** to different temperature values. In response to the known temperature, recalibration of the weight sensor **42(1)** may normalize the error out of the weight measurement based on the temperature. It is contemplated that when data anomalies are discovered, the cloud-based server **70** may send a prompt to the consumer asking for pictures and/or videos of the device assembly **40.** For those instances where location, attitude (physical position of the device, e.g., tilted) of the device assembly **40** may be determined to be the culprit of data anomalies, the cloud-based server **70** may prompt the consumer to rectify the situation by moving the device assembly **40.**

The controller **44** may be configured to use the secondary edge algorithms **46** to generate error codes. The secondary edge algorithms **46** may assess the statistical variance of a measurement, and may be used to throw error codes, thus creating awareness of a problem. For example, when the tare reference is collected, the individual data points may have a high standard deviation because the consumer was probably still dragging the consumable product **30** across the top of the device assembly **40** when a measurement was being made. An error code or flag may be generated by the controller **44** and reported to the cloud-based server **70** so that the corresponding edge algorithm outputs **46** may be considered as non-trustworthy.

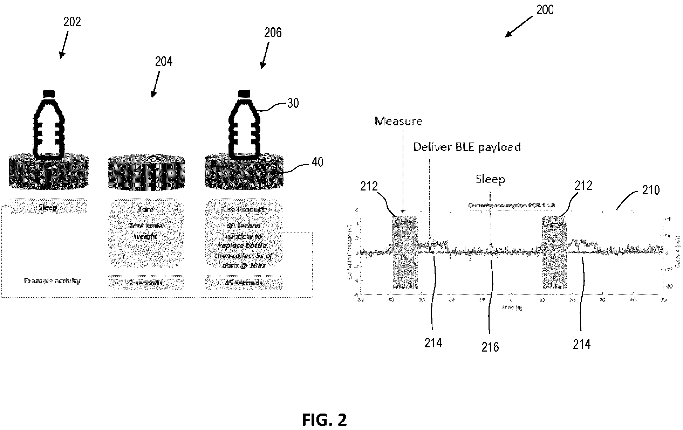

An example sequence **200** of collecting weight measurements will be discussed in reference to FIG. 2. At a first sequence **202,** the device assembly **40** may be in a sleep mode and no sensor data **52** may be collected. At a second sequence **204,** the device assembly **40** may wake up when the consumable product **30** is removed from the device assembly **40.**

When the device assembly **30** first wakes up, any weight measurements that may be collected by the weight sensor **42(1)** are set to zero. This is referred to as zeroing out the weight sensor **42(1)** or performing a tare function. This may take about 2 seconds. When the weight sensor **42(1)** is a load cell, for example, it may typically drift or creep over time, so setting the weight sensor **42(1)** to a zero measurement without the consumable product **30** placed on the device assembly **40** may correct for any drift.

Between the second and third sequences **204** and **206,** there may be about a 40 second window for the consumer to return the consumable product **30** back to the device assembly **40.** At a third sequence **206,** once the consumable product **30** is returned to the device assembly **40** after use by the consumer, then about 5 seconds of raw sensor data **52** may be collected.

In graph **210,** example voltage and current consumption of the device assembly **40** may fluctuate during the different sequences. The voltage and current consumption during weight measurements may be high as indicated during time series **212.** The voltage and current consumption of the weight measurements being delivered as a payload to the gateway **60** may be medium during time series **214.** In between the weight measurements, the device assembly **40** may return back to the sleep mode during time series **216,** where the voltage and current consumption may be low.

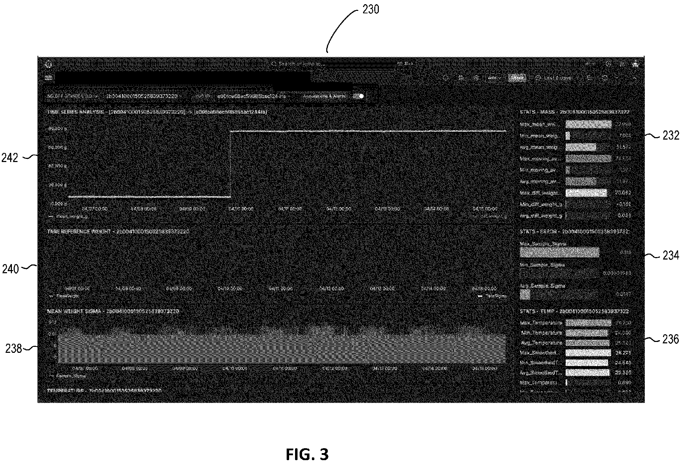

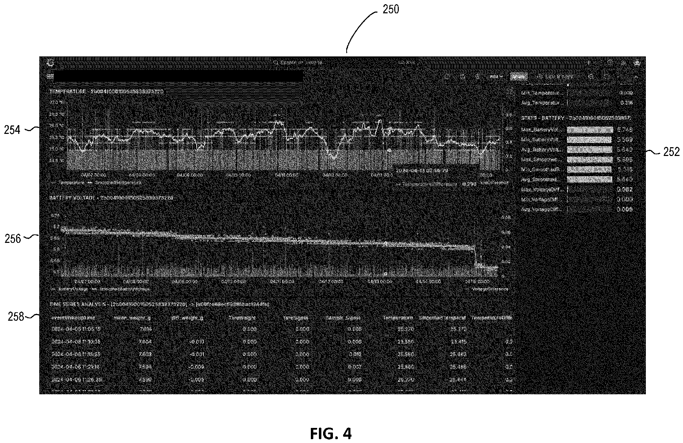

Referring now to FIGS. 3 and 4, dashboard screenshots **230, 250** may be provided to illustrate data analysis that may be performed by the cloud-based server **70** in order to train and refine the edge algorithms **46.** The dashboard screenshots **230, 250** may provide statistics that may be generated by the cloud-based server **70** across a large time window of data. In this case, the time window of data being shown may be for multiple days.

This type of computation may be difficult to do on the device assembly **40** using the edge algorithms **46,** but may be relatively straightforward for the cloud-based server **70.** When an edge algorithm **46** is deployed, the edge data reported from the device assembly **40** may be much simpler since the raw sensor data **52** may be summarized as a single data point by the edge algorithm **46** for analysis by the usage module **76** in the cloud-based server **70.** Power and memory in the device assembly **40** may be limited so the edge algorithms **46** need to be straightforward.

As reflected in the dashboard screenshots **230, 250,** the analyze module **78** in the cloud-based server **70** may be analyzing all of the raw sensor data **52** collected by the sensors **42.** In dashboard screenshot **230,** mass stats **232,** sigma stats **234** and temperature stats **236** may be provided. A time series **238** over multiple days may be provided for the mean weight sigma, a time series **240** over multiple days may be provided for the tare reference weight, and a time series **242** over multiple days may be provided for the mean weight.

In dashboard screenshot **250,** battery stats **252** may be provided. A time series **254** over multiple days may be provided for the temperature, and a time series **256** over multiple days may be provided for the battery voltage. In addition, a summary chart **258** may also be provided to list out the different stat values every 5 seconds.

The implementation of edge algorithms **46** may have a number of uses. A first use may be for the transmission of less data by condensing the data points collected by a sensor **42** over a sample period to a single edge algorithm output **54.** This may simplify the number of data points to be analyzed by the cloud-based server **70** to determine usage and consumption of the consumable product **30.**

A second use of the edge algorithms **46** may be for the system **20** to provide a faster round-trip time to action, such as sending a usage triggered survey to the consumer after having just used the consumable product **30.** Qualitative information may be obtained when consumer sentiment matches up with actual usage of the consumable product **30.**

As part of the marketing survey being conducted by the manufacturer of the consumable product **30,** a survey app **82** may be installed on the consumer's client device **80.** The client device **80** may be a desktop computing device or a mobile computing device. A mobile computing device may include a cell phone or a personal display assistant (PDA), for example.

In a first scenario, the device assembly **40** may send the edge algorithm outputs **54** directly to the client device **80.** The survey app **82** may have pre-deployed survey questions that may be triggered by specific criteria, such as a weight change in the consumable product **30.** The survey app **82** may then make the decision to pop up the survey based on the received edge algorithm outputs **54** satisfying the specific criteria. This scenario may provide a faster round-trip time to action since initiation of the survey may not involve the cloud-based server **70.** The turnaround time for the client device **80** to initiate the survey may be tens of seconds, for example. This may allow for an accurate emotional response from the consumer.

In a second scenario, which may provide a slower round-trip time to action, the cloud-based server **70** may feed the survey to the client device **80.** The survey being provided by the cloud-based server **70** may not be pre-deployed as in the first scenario, which means the survey may ask for responses beyond the pre-deployed survey questions. This scenario may require the cloud-based server **70** to receive the edge algorithm outputs **54** from the device assembly **40,** may parse the edge algorithm outputs **54,** and may process the edge algorithm outputs **54** before making a decision to send the survey to the client device **80.** This takes time, particularly if the cloud-based server 70 is made up of multiple servers that may require data to be passed from server to server before determining to send the survey to the client device **80.** The turnaround time for the client device **80** to initiate the survey may be several minutes, for example, at which point the emotional response from the consumer may not be as accurate.

Regardless of whether the first scenario or second scenario are utilized, the survey may prompt the user to take one or more pictures / videos of the consumable product of interest and/or the space in which the consumable product of interest is being utilized. Additionally, the survey may ask for pictures / videos of the consumable product of interest in use.

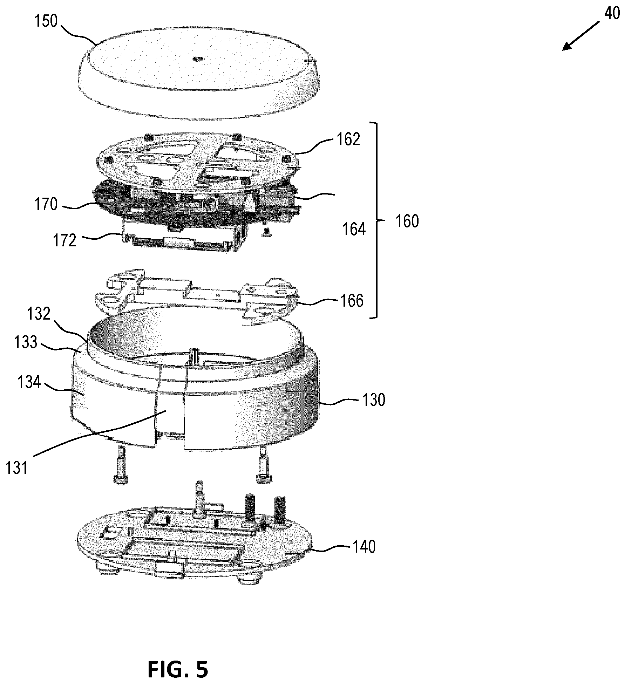

Referring now to FIG. 5, an exploded view of an exemplary device assembly **40** will be discussed. The illustrated device assembly **40** may be circular shaped, e.g., a coaster. This shape is not to be limiting as the device assembly **40** may have other shapes, such as an oval, a square or a rectangle, for example. The device assembly **40** may include a housing **130,** a bottom cover **140,** a top plate **150,** and a load cell assembly **160** within an interior of the housing **130.** The load cell assembly **160** may be one example of the weight sensor **42(1)** as discussed above.

The load cell assembly **160** may comprise a load plate **162,** a load cell **164** and a bottom plate **166** coupled together. The load plate **162** may be coupled to an under surface of the load cell **164,** and the bottom plate **166** may be coupled to a lower surface of the load cell **164.** The load cell **164** may be the only thing connecting the load plate **162** and the bottom plate **166.** The load cell **164** may convert a force such as pressure into a signal that can be measured and standardized. The load cell **164** may also be referred to as a force transducer. As the force applied to the load cell **164** increases, the signal changes proportionally.

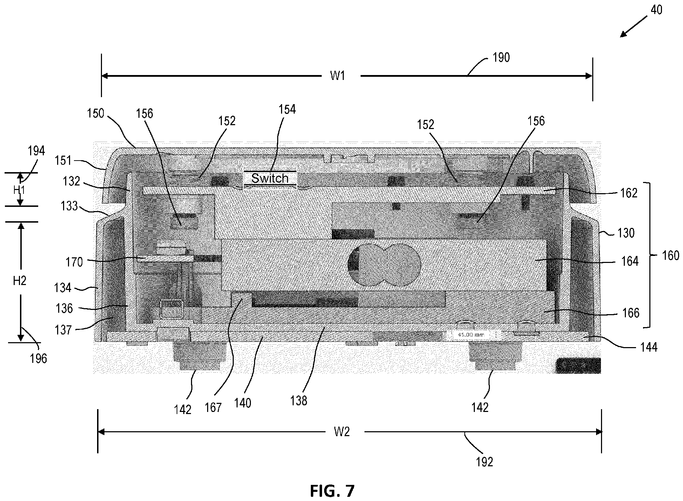

The top plate **150** may be coupled to the load plate **162** and may be movable with respect to the load plate **162.** The top plate **150** may be spring-loaded **152** and a switch **154** may be positioned between the top plate **150** and the load plate **162** (see FIG. 7). When the consumable product **30** is placed on the device assembly **40,** the top plate **150** may be pushed down against the springs and the switch. When the consumable product **30** is removed from the device assembly 40, the springs may push up against the top plate **150** which in turn may activate the switch to wake up the device assembly **30.** The switch may be a pressure switch, pressure sensitive membrane, diaphragm switch, and the like. The switch may detect the removal and placement of the consumable product **30** onto the device assembly **40.**

When the device assembly **40** first wakes up, any weight measurements collected by the load cell **164** may be set to zero. This is referred to as zeroing out the load cell **164** or performing a tare function. Load cells **164** may typically drift or creep over time, so setting the load cell **164** to a zero measurement without the consumable product **30** placed on the top plate **150** may correct for any drift.

When the consumable product **30** is returned to the top plate **150,** then the load cell **164** may collect weight measurements of the consumable product **30.** This may allow weight changes in the range of 0.25 grams to 1 gram to be detected. By subtracting a current measurement from a previous measurement, usage and consumption of the consumable product **30** may be determined.

A printed circuit board **170** may surround the load cell **164** and may be positioned between the load plate **162** and the bottom plate **166.** A battery holder **172** may be electrically coupled to an underside of the printed circuit board **170.** The printed circuit board **170** may be powered by batteries carried by the battery holder **172.** The batteries may be AA batteries, for example. The bottom cover **140** may be removable to access the batteries. Other configurations are contemplated where the device assembly **40** may comprise a plugin power source or a rechargeable battery pack.

The housing **130** may have an upper edge section **132** and a lower edge section **134** and may include a transition section **133** therebetween. The upper edge section **132** may be recessed from the lower edge section **134.** The bottom cover **140** may be coupled to an underside of the housing **130.** The top plate **150** may extend over a topside of the housing **130** and may overhang a portion of the transition section **133.**

The housing **130** may further comprise a removable housing side panel **131** which may expose a connector interface that may connect to the printed circuit board **170.** The connector interface may be a USB or micro-USB interface, for example. After the device assembly **40** has been returned by the consumer, the connection interface may allow developers of the device assembly **40** to reprogram the edge algorithms **46** or download data stored on the printed circuit board **170.**

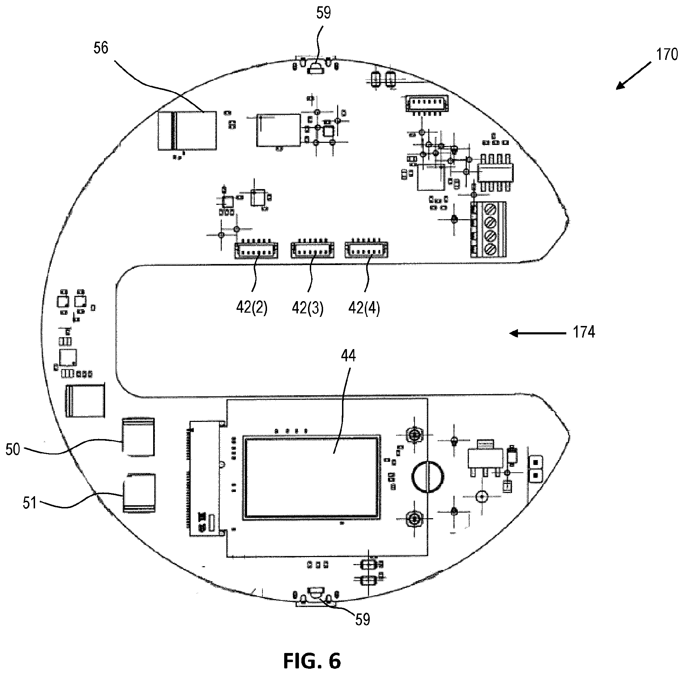

The printed circuit board **170** may be horseshoe-shaped or u-shaped, as illustrated in FIG. 6. The printed circuit board **170** may have an opening **174** that surrounds the load cell **164** when positioned within the housing **130.** The electronic circuitry on the printed circuit board **170** may include the controller **44,** the memory **50,** the temperature sensor **42(2),** the battery sensor **42(3),** and the motion sensor **42(4).**

The motion sensor **42(4)** may be an attitude and heading reference system (AHRS) that may include three gyroscopes and three accelerometers for the x, y and z-axis. The motion sensor **42(4)** may determine if the device assembly **40** is being moved or has been placed on an inclined surface, in which case any weight measurements collected by the load cell **164** may be discarded or flagged as an error code. The motion sensor **42(4)** may also determine if the device assembly **40** has been dropped, in which case a recalibration of the load cell **164** may need to be performed.

The printed circuit board **170** may also include one or more indicator lights **59** to get the attention of the consumer currently using the consumable product **30.** If the consumer is taking too long to return the consumable product **30** back to the device assembly **40,** then the indicators lights **59** may be activated. As another example, the consumer may not correctly set the consumable product **30** back down on the device assembly **40,** such as by sliding the consumable product **30** across the surface of the device assembly **40** when setting it down. Since this may result in a bad weight measurement, the indicator lights **59** may be activated so that the consumer will pick up the consumable product **30** and set it down again. As yet another example, the indicators lights **59** may be activated when power is low and the batteries need to be changed.

The indicator lights **59** may be activated without input from the cloud-based server **70.** This activation may be within seconds which allows for a quicker reaction time by the consumer, particularly when the consumable product **30** needs to be returned to the top plate **150** or removed and returned to the top plate in a timely manner for the load cell **164** to obtain an accurate weight measurement. The alternative is for the device assembly **40** to report an anomaly to the gateway **60,** which in turn may pass the anomaly to the cloud-based server **70.** The cloud-based server **70** then may process the anomaly and may return a command to activate the indicator light **59.** This may take several minutes before the indicator lights **59** may be activated, at which time it may be too late for the consumer to react accordingly.

The printed circuit board **170** may also include the communication module **56** for communicating with the gateway **60.** The communication module **56** may include an antenna and transponder that may operate based on a short-range wireless technology standard, such as Bluetooth.

The communication module **56** may transmit the raw sensor data **52** and the edge algorithm outputs **54** to the gateway **60.** The gateway **60** may then use a cellular communication module **64** which may transmit the raw sensor data **52** and the edge algorithm outputs **54** to the cloud-based server **70.** The Bluetooth communication module **56** may draw less power than the cellular communication module **64** which may help to reduce power consumption of a battery-operated device assembly **40.**

Nonetheless, the printed circuit board **170** may be configured to operate with a cellular communication module so that the raw sensor data **52** and the edge algorithm outputs **54** may be transmitted directly to the cloud-based server **70.** The tradeoff will be increased power consumption of a battery-operated device assembly **40.**

If the device assembly **40** cannot establish communications with the gateway **60** or with the cloud-based server **70** when operating with a cellular communication module, then the raw sensor data **52** and the edge algorithm outputs **54** may be placed in a buffer **51** until communications is re-established. The buffer **51** may be a ring buffer, for example, that may reuse the memory when needed and may be pre-allocated so it is ready to be used and can be written as soon as it is needed.

Referring now to FIG. 7, a cross-sectional view of the device assembly **40** will be discussed. The device assembly **40** may be configured to be water-resistant, which may be necessary when placed in a wet environment. For example, the device assembly **40** may be placed in the shower when the consumable product **30** is shampoo or conditioner.

The top plate **150** may extend over a topside of the housing **130** and may overhang a portion of the transition section **133.** The top plate **150** may be flat with rounded edges so that water will run off. The transition section **133** of the housing **130** may be sloped upwards toward the upper edge section **132** so that the water will continue to drain away from the housing **130.**

As noted previously, the housing **130** may have the upper edge section **132** and the lower edge section **134** with the transition section **133** therebetween. A height **194** of the upper edge section **132** may be less than a height **196** of the lower edge section **134.** The height **194** of the upper edge section **132** and the height **196** of the lower edge section **134** may be separated by the transition section **133** which is sloped upwards from the lower edge section **134** to the upper edge section **132.** This difference in height between the lower and upper edge sections **132, 134** may help to further prevent water from entering the interior of the housing **130** and contacting the printed circuit board **170.** The height **194** of the upper edge section **132** may be about one-third to one-fourth the height **196** of the lower edge section **134.** In addition, feet **142** may be placed on an underside of the bottom cover **140.** The feet **142** may be sized to prevent water from entering the interior of the housing **140** when placed in a pool of standing water.

The bottom cover **140** may be removable to access the batteries **58.** An outermost edge **144** of the bottom cover **140** may be recessed from the lower edge section **134** of the housing **130.** In particular, the outermost edge **144** of the bottom cover **140** may extend into a gap **137** defined by the lower edge section **134** and an adjacent intermediate lower edge section **136.** A bottom surface **138** of the housing **130** may extend between the intermediate lower edge sections **136.**

As noted, the top plate **150** may extend over a topside of the housing **130** and overhang a portion of the transition section **133** of the housing **130.** The side edge **151** of the top plate **150** may be recessed from the lower edge section **134** of the housing **130.** The top plate **150** may have a width, as shown, e.g., a diameter **190.** The housing **130** may have a width **192** when measured at the lower edge section **134.** The width **192** may be the outer most width of the housing **130.** The width **190** of the top plate **150** may be less than the width **192** of the housing **130.** The difference in widths **190, 192** may be within a range of 0.125 inches to 0.375 inches. This range may vary based on the final size of the device assembly **40.** Consequently, if the device assembly 40 comes in contact with an item placed next to it, contact may be made with the lower edge section **134** of the housing **130** and not the side edge **151** of the top plate **150.** If contact was to be made with the side edge **151** of the top plate **150,** then any weight measurements may not be accurate during contact with the item. In addition, a shape of the side edge **151** of the top plate **150** and a shape of the upper edge section **132** of the housing **130** may be proportionally concentric so that they do not rub against one another. Also, the side edge **151** of the top plate **150** may be sized so that a lower surface of the side edge **150** will not bottom out against the transition section **133** when the consumable product **30** is full.

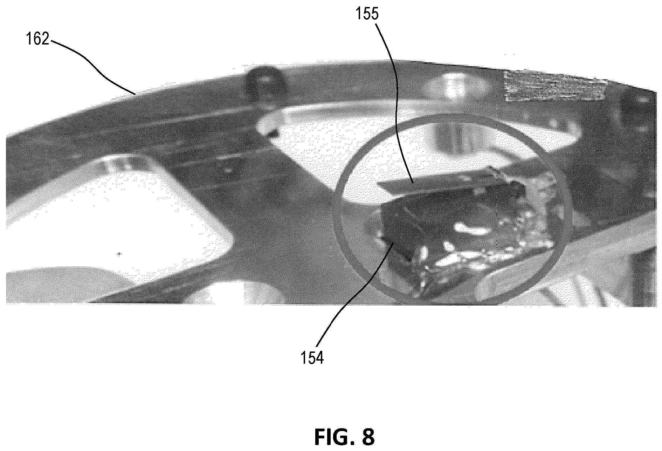

As noted above, the top plate **150** may be spring-loaded **152** and a switch **154** may be positioned between the top plate **150** and the load plate **162.** The switch **154** may be configured as a micro-switch that may have an arm **155** that may protrude upwards and hit the underside of the top plate **150** (see FIG. 8). The springs **152** may be held in place using bolts **156** that may extend from an underside of the load plate **162** into the top plate **150** while still allowing the top plate **150** to move freely up and down.

When the consumable product **30** is placed on the top plate **150,** the top plate **150** may be pushed down against the springs and may contact the arm **155** of the switch **154.** When the consumable product **30** is removed from the device assembly **40,** the springs may need to be strong enough to push the top plate **150** upwards so that it no longer makes contact with the arm **155** of the switch **154.** There may be a balance between the strength of the springs **152** and a weight of the top plate **150** so that when the consumable product **30** approaches empty, the consumable product **30** can still push the top plate **150** down. As shown, since the height **194** of the upper edge section **132** may be significantly less than the height **196** of the lower edge section **134,** less material may be used for the side edge **151** of the top plate **150.** This may help in balancing between the weight of the top plate **150** and the strength of the springs **152.**

As the springs **152** push the top plate **150** upwards after removal of the consumable product **30** so that contact is no longer made with the arm of the switch **154,** the device assembly may wake up. Upon wakeup, any weight measurements collected by the load cell **164** may be set to zero. When the consumable product **30** is returned to the top plate **150,** then weight measurements may be taken by the load cell **164.**

A closeup view of the switch **154** and arm **155** are illustrated in FIG. 8. The switch may be mounted to the load plate **162,** and the arm **155** may protrudes upwards. In such configurations, the arm **155** may hit the underside of the top plate **150** when a consumable product **30** is placed on the top plate **150.** This is due to the springs **152** being pushed down by the weight of the consumable product **30.** When the consumable product **30** is removed from the top plate **150,** then the springs **152** may push the top plate **150** upwards so that the top plate **150** no longer makes contact with the arm **155** of the switch **154.** The device assembly **40** may then wake up in response to the arm **155** no longer contacting the underside of the top plate **150.**

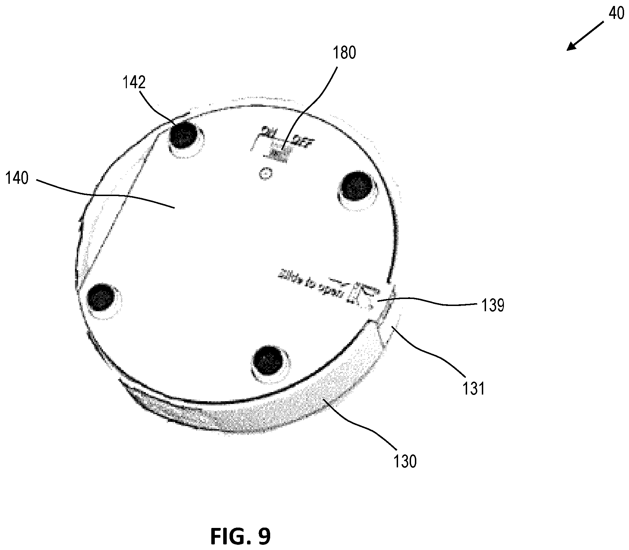

A bottom perspective view of the device assembly **40** is illustrated in FIG. 9. An on/off switch **180** may be accessible on an underside of the device assembly **40.** Feet **142** may extend outwards from the bottom cover **140,** where the feet **142** may elevate the housing **140** to prevent water from entering the interior of the housing **140** when placed in a pool of standing water. Any suitable height for the feet **142** may be utilized. For example, the feet **142** may have a height of from about 2 mm to about 20 mm, preferably from about 3 mm to about 15 mm, more preferably from about 4 mm to about 10 mm, or even more preferably from about 4 mm to about 7 mm. It is believed that the higher the feet **142** are, the more obtrusive the device assembly **40** becomes and will be less likely to be utilized by consumers.

The removable housing side panel **131** may include a flexible extension lever **137** that is exposed through an opening in the bottom cover **140.** The flexible extension lever **137** may also engage the bottom cover **140** while in a locked position to hold the bottom cover **140** in place.

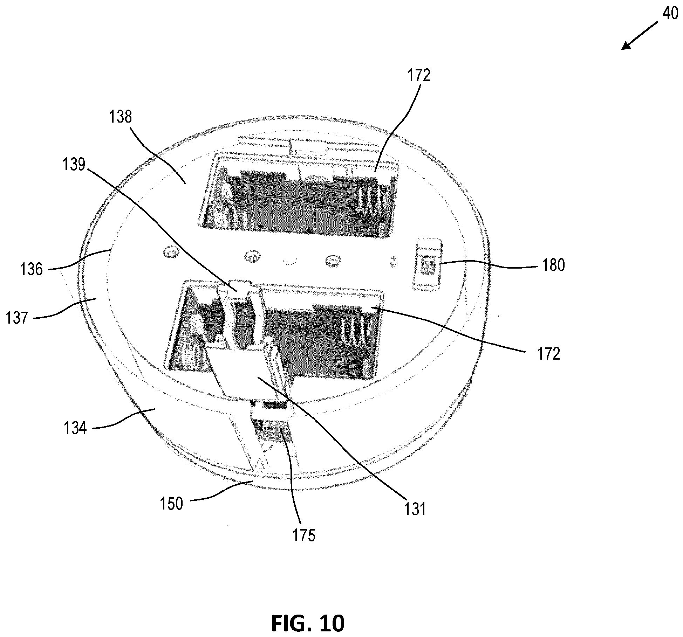

A bottom perspective view of the device assembly **40** with the bottom cover **140** removed is illustrated in FIG. 10. To remove the bottom cover **140,** the flexible extension lever **137** may be moved from the locked position to an unlocked position. In the unlocked position the flexible extension lever **137** no longer engages the bottom cover **140.** After the bottom cover **140** has been removed, the housing side panel **131** may be slid away from the housing **130** to expose the connector interface **174** that connects to the printed circuit board **170.** The battery holders **172** may also be exposed with the bottom cover **140** removed. The on/off switch **180** may still be accessible on the underside of the device assembly **40** with the bottom cover **140** removed.

It is worth noting that device assemblies **40** may be configured with load cells **160** which may be appropriate for their expected use. For example, a device assembly **40** that may be configured with a load cell **160** which can accommodate higher weights, e.g., 4 kg, may not be suitable for use with lower weights, e.g., 100 grams. In such instances, the device assembly **40** may provide accurate weight information for the heavier weighted object but not necessarily provide such accurate results for the lower weighted object.

The selection of the appropriate load cell **160** to utilize within the device assemblies **40** is not a trivial task. For example, particularly where heavier weights are contemplated, the load cell 160 may be selected to provide accurate results when the weighted object is full and when it is near empty. At the near empty stage of use, the weighted object may lose a very large portion of its weight. In general, the load cell **160** may be selected having a sensitivity of not less than 10 grams plus or minus 5 grams. Sensitivity may be selected to go down to zero if needed. However, too sensitive of a load cell **160** can increase the likelihood of damage during use.

As the device assemblies **40** of the present disclosure are contemplated for use in wet environments, it is conceivable that some items may slip from a consumer's hands and impact the device assembly **40.** Such impacts may damage the load cell **160** and/or negatively impact calibration of the load cell **160.** In order to prevent catastrophic failure, one or more physical stops **167** (FIG. 7) may be utilized. The one or more physical stops **167** may limit the travel of the load cell **160** and ensure that it is not damaged.

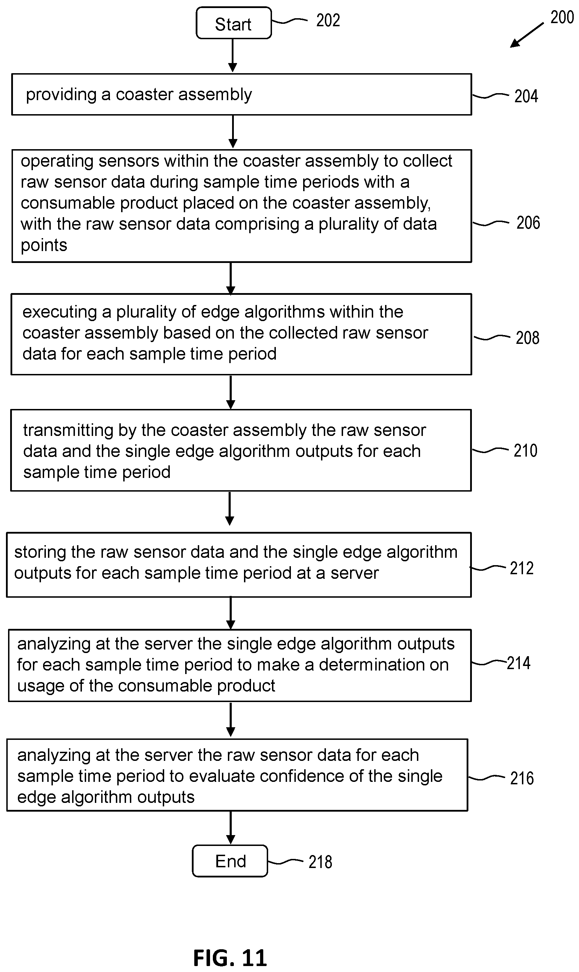

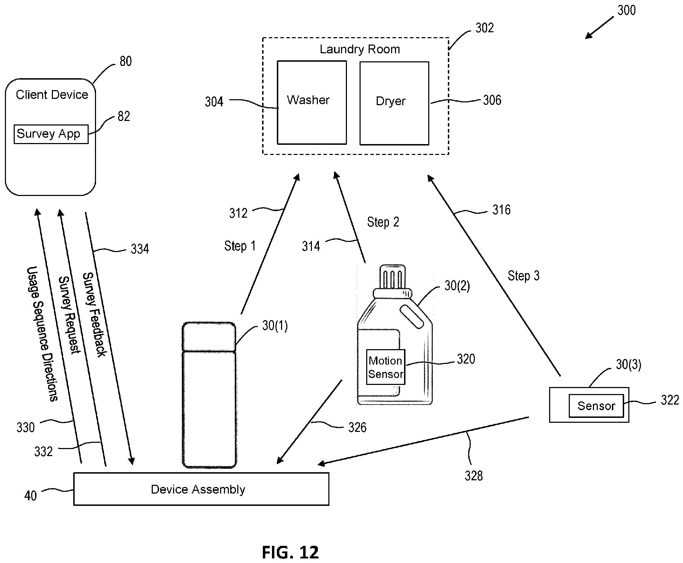

Another aspect may be directed to a method of determining usage of a consumable product **30** with the system **20.** Referring now to the flowchart **200** in FIG. 11, from the start (Block **202**), a device assembly **40** may be provided at Block **204.** The device assembly **40** may be operated to collect raw sensor data **52** during sample time periods with a consumable product that may be placed thereon at Block **206,** with the raw sensor data **52** comprising a plurality of data points within each sample time period for each sensor. A plurality of edge algorithms **46** may be executed at Block **208** based on the collected raw sensor data **52** for each sample time period. Each edge algorithm **46** may summarize the raw sensor data **52** from at least one of the sensors **42** as a single edge algorithm output **54.** A communication module **56** within the device assembly **40** may transmit the raw sensor data **52** and the single edge algorithm outputs **54** for each sample time period. The method may further include operating the server **60** to store at Block **212** the raw sensor data **52** and the single edge algorithm outputs **54** for each sample time period. The single edge algorithm outputs **54** for each sample time period may be analyzed at Block **214** to make a determination on the usage of the consumable product **30.** The raw sensor data **52** for each sample time period may be analyzed at Block **216** to evaluate confidence of the single edge algorithm outputs. The method ends at Block **218.** Referring now to FIG. 12, a schematic diagram **300** of the system **20** may be configured to prompt a consumer on a recommended sequence of use of consumable products **30** will be discussed. Promptly after using the consumable products **30,** this may allow the consumer to answer survey questions about their experience with the consumable products **30,** where qualitative information may be obtained when consumer sentiment matches up with actual usage of the consumable products **30.**

In the illustrated example, the consumable products **30** may be laundry products to be used in a certain sequence with a washer **304** and dryer **306** within a laundry room **302.** In other examples, the consumable products **30** may be bath products, e.g., hair shampoo and conditioner, body wash, skin cleansers, personal grooming products, e.g., shave gels, creams, manual razors, electric razors, hair trimmers, post shave creams, gels, lotions, or cleaning products. The laundry products may include a bottle of laundry beads **30(1),** laundry detergent **30(2)** and a box of dryer sheets **30(3).**

The laundry beads **30(1)** may be scent boosters to give clothes a stronger, longer-lasting scent after washing. Laundry beads **30(1)** may be placed in the washer **304** before clothes and water are added to the washer **304.** After the clothes and water are in the washing machine **304,** then the laundry detergent **30(2)** may be added for washing. After the clothes have been washed, then the clothes may be placed in the dryer **306** along with a dryer sheet **30(3)** to help to keep clothes from wrinkling in the dryer **406,** and to soften, reduce static and repel lint. For best results, the laundry products **30** may be preferably used in a certain sequence.

After a bottle of the laundry beads **30(1)** has been placed on a device assembly **40,** the device assembly **40** may be ready to monitor the laundry beads **30(1).** The device assembly **40** may detect when the bottle of laundry beads **30(1)** is lifted off the device assembly **40.** This may indicate that the laundry beads **30(1)** are being used as indicated by step 1 **310.** The bottle of laundry beads **30(1)** may then be returned to the device assembly **40.** The device assembly **40** may send a first message as part of the usage sequence directions **330** to the survey app **82** in the client device **80.** The usage sequence directions **330** may prompt the consumer to add laundry detergent **30(2)** in the washer **304** along with the clothes.

It is worth noting that models may be developed and provided to the device assemblies **40** which allow for the device assemblies **40** to determine the type of product **30** that it is weighing. For example, via models, the device assemblies **40** may know that a laundry detergent bottle has been placed upon it or a laundry scent booster. Additionally, other configurations may be utilized. For example, RFID identification may be utilized so that the device assembly **40** may read the RFID of the product **30** being weighed. At step 2**314,** laundry detergent **30(2)** may be added to the washer **304.** The laundry detergent **30(2)** may include a sensor **320** to send sensor data **326** to the device assembly **40** when the laundry detergent **30(2)** is being moved. The sensor **320** may be a motion sensor that may detect movement of the laundry detergent **30(2),** where movement may be used by the device assembly **40** to indicate usage of the laundry detergent **30(2).**

After the device assembly **40** receives the sensor data **326** from the usage sensor **320,** the device assembly **40** may send a second message as part of the usage sequence directions **330** to the survey app **82** in the client device **80.** The usage sequence directions **330** may prompt the consumer to add one or more dryer sheets **30(3)** to the dryer **306** along with the wet clothes. At step 3 **316,** a dryer sheet **30(3)** may be added to the dryer **306.**

The box of dryer sheets **30(3)** may include a sensor **322,** such as a time-of-flight sensor, which may be a tiny laser that emits infrared light. The time-of-flight sensor may be configured to measure a height of the dryer sheets **30(3)** which may be used to determine usage of the dryer sheets **30(3).** The device assembly **40** may receive sensor data **328** from the sensor **322** indicating usage of the dryer sheets **30(3).**

The device assembly **40** may then send a survey request **332** to the survey app **82** in the client device **80.** In response to the consumer answering the survey questions, the survey app **82** may provide survey feedback **334** back to the device assembly **40.** The survey feedback **334** may provide qualitative information based on actual usage of the consumable products **30** in the correct sequence. The device assembly **40** may communicate the survey feedback **334** to the gateway **60** which may then be relayed to the cloud-based server **70.** The device assembly **40** may also communicate the sensor data **326, 328** from sensors **320, 322** to the gateway **60** for analysis.

In addition, the washer **304** and the dryer **306** may use sensors to indicate time of cycle, duration and energy consumption of wash/dry sub-cycles. Collectively, this data may be analyzed in view of the sensor data provided by the device assembly **40** and the motion sensor data provided by the motion sensor **320** in the laundry detergent **30(2)** to determine the criteria for a survey or notification to be sent to the consumer. For example, a determination may be made that more product was used on load 1 versus load 2. In this case, a survey or notification may be then sent to the consumer.

The bottle of laundry beads **30(1)** may also have a motion sensor. As a possible scenario, the bottle of laundry beads **30(1)** may get knocked over and is not returned to the device assembly within an expected time frame for a weight measurement. Then a different person doing laundry may not know that the consumer is doing a study, and this person may then pick up the tipped over bottle of laundry beads **30(1)** to start a load of laundry. This person then may return the bottle of laundry beads **30(1)** to the device assembly **40.**

The sensor data that may be collected by the device assembly **40** is time stamped. The sensor data from the motion sensor in the bottle of laundry beads **30(1)** may allow the device assembly **40** to determine that there was movement and possible usage of the bottle of laundry beads **30(1).** The sensor data may also be used to explain why a weight measurement was not made within the expected timeframe due to the bottle of laundry beads **30(1)** being tipped over. The next time the consumer does laundry, the device assembly **40** may detect a large weight change in the laundry beads **30(1).** The sensor data may be combined with the other sensor data to develop a fuller picture on usage of the laundry products **30** or any other products which may be utilized in conjunction with the device assembly **40.**

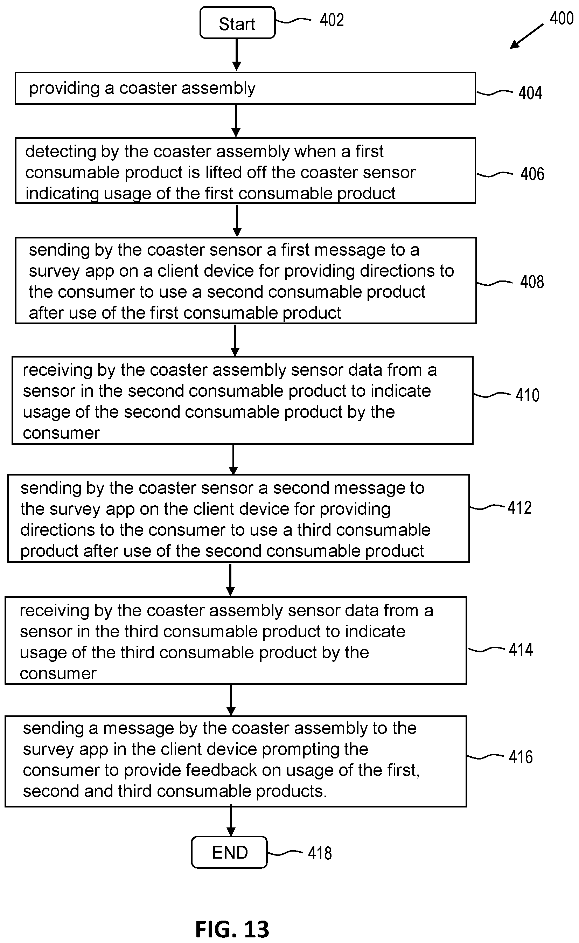

Another aspect may be directed to a method of prompting a consumer on a recommended sequence of use for a plurality of consumable products **30** based on the schematic diagram **300.** Referring now to the flowchart **400** in FIG. 13, from the start (Block **402**), the method may include placing a consumable product providing a device assembly **40** at Block **404.** The device assembly 40 may detect at Block **406** when a first consumable product **30(1)** is lifted off the device assembly **40** which may indicate usage of the first consumable product **30(1).** The device assembly **40** may send at Block **408** a first message as part of the usage sequence directions **430** to a survey app **82** on a client device **80** which may provide directions to the consumer to use a second consumable product **30(2)** after use of the first consumable product **30(1).**

The device assembly **40** may receive at Block **410** sensor data **426** from a sensor **420** in the second consumable product **30(2)** which may indicate usage of the second consumable product **30(2)** by the consumer. The device assembly **40** may send a second message at Block **412** as part of the usage sequence directions **330** to the survey app **82** on the client device **80** for providing directions to the consumer to use a third consumable product **30(3)** after use of the second consumable product **30(2).**

The device assembly **40** may receive sensor data **328** at Block **414** from a sensor **322** in the third consumable product **30(3)** which may indicate usage of the third consumable product **30(3)** by the consumer. The device assembly **40** may send a survey request message **332** at Block **416** to the survey app **82** in the client device **80** which may prompt the consumer to provide survey feedback **334** on usage of the first, second and third consumable products **30.** The method may end at Block **418.**

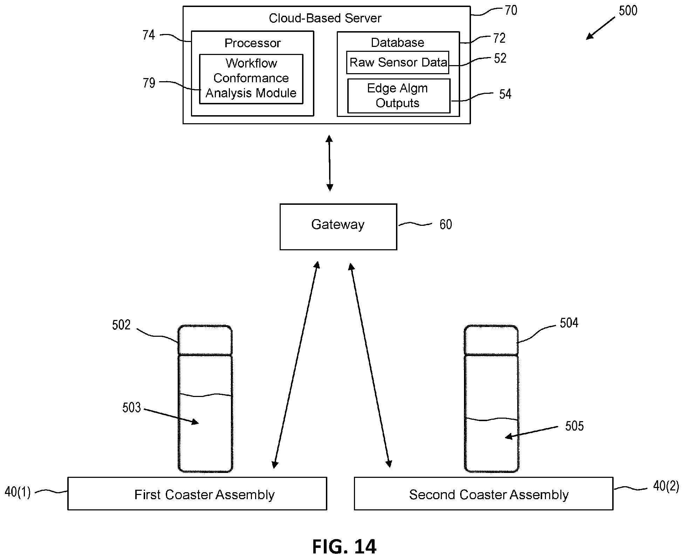

Referring now to FIG. 14, a schematic diagram **500** of the system **20** that may be configured to operate with a first device assembly **40(1)** and a second device assembly **40(2)** for detecting conformance with a recommended sequence of use for consumable products **503, 505** will be discussed.

A first consumable product package **502** may include the first consumable product **503,** and a second consumable product package **504** that may include the second consumable product **503.** The first and second consumable products **503, 505** may be laundry products, bath products or cleaning products, for example. For optimal consumer satisfaction, the first and second consumable products **503, 505** may be used in a recommended sequence.

The first consumable product package **502** may be placed on the first device assembly **40(1).** Weight measurements that may be collected by the first device assembly **40(1)** may be transmitted to the gateway **60** which then may transmit the weight measurements to the cloud-based server **70.** The cloud-based server **70** may include a workflow conformance analysis module **79** that may be configured to calculate a first amount of the first consumable product **503** consumed during usage of the first consumable product **503.** The workflow conformance analysis module **79** may compare the first amount to a first recommended usage amount for the first consumable product **502** which may produce a first usage amount comparison.

The second consumable product package **504** may be placed on the second device assembly **40(2).** Weight measurements collected by the second device assembly **40(2)** may be transmitted to the gateway **60** which then may transmit the weight measurements to the cloud-based server **70.** The workflow conformance analysis module **79** in the cloud-based server **70** may be configured to calculate a second amount of the second consumable product **505** consumed during usage of the second consumable product **505.** The workflow conformance analysis module **79** may compare the second amount to a second recommended usage amount for the second consumable product **504** to produce a second usage amount comparison.

The workflow conformance analysis module **79** may then compare a timestamp when the first consumable product package **502** is first used and a timestamp on when the second consumable product package **504** is first used to a recommended sequence and may produce a sequence comparison. A workflow conformance analysis that may include the first usage amount comparison, the second usage amount comparison, and the sequence comparison may be reported by the workflow conformance analysis module **79.**

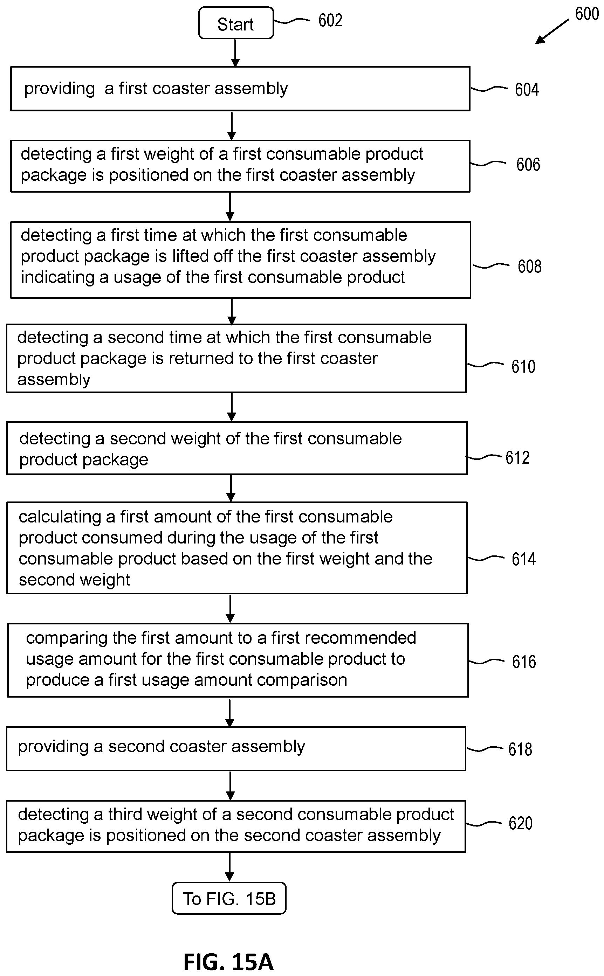

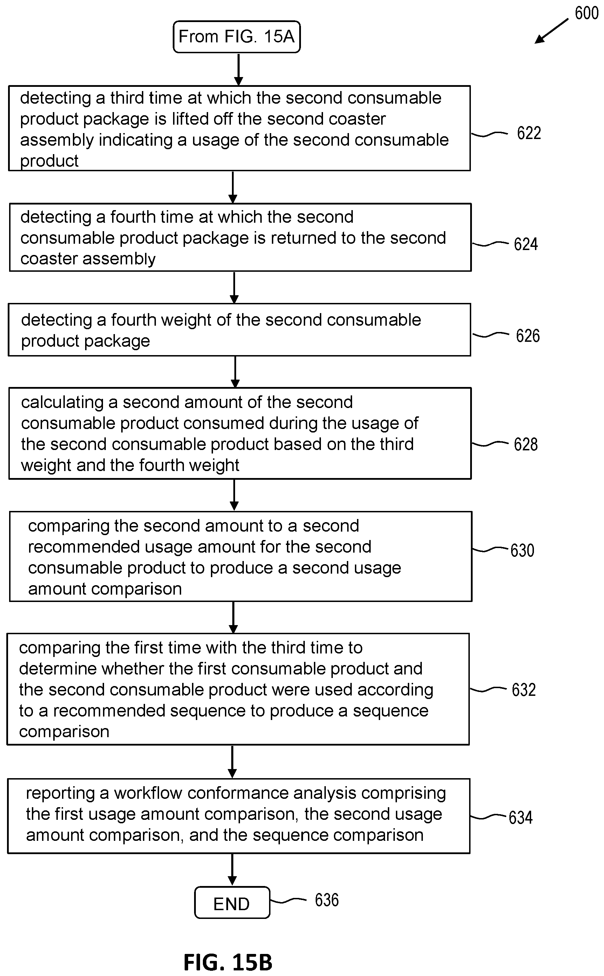

Another aspect may be directed to a method of detecting conformance with a recommended sequence of use for a plurality of consumable products **503, 505** that may be based on the schematic diagram **500.** Referring now to the flowchart **600** in FIGS. 15A-15B, from the start (Block **602**), the method may include providing a first device assembly **40(1)** at Block **604.** A first weight of a first consumable product package **502** may be detected at Block **606.** The first consumable product package **502** may include a first consumable product **503** positioned on the first device assembly **40(1).** A first time at which the first consumable product package **502** is lifted off the first device assembly **40(1)** may be detected at Block **608** may indicate a usage of the first consumable product **503.** A second time at which the first consumable product package **502** is returned to the first device assembly **40(1)** may be detected at Block **610.** A second weight of the first consumable product package **502** may be detected at Block **612.** A first amount of the first consumable product **503** that may be consumed during the usage of the first consumable product **503** may be calculated at Block **614** based on the first weight and the second weight. The first amount may be compared to a first recommended usage amount for the first consumable product **503** at Block **616** to produce a first usage amount comparison.

A second device assembly **40(2)** may be provided at Block **618.** A third weight of a second consumable product package **504** may be detected at Block **620.** The second consumable product package **504** may include a second consumable product **505** positioned on the second device assembly **40(2).** A third time at which the second consumable product package **504** is lifted off the second device assembly **40(2)** may be detected at Block **622** indicating a usage of the second consumable product **505.** A fourth time at which the second consumable product package **504** is returned to the second device assembly **40(2)** may be detected at Block **624.** A fourth weight of the second consumable product package **504** may be detected at Block **626.** A second amount of the second consumable product **505** consumed during the usage of the second consumable product **505** may be calculated at Block **628** based on the third weight and the fourth weight. The second amount may be compared at Block **630** to a second recommended usage amount for the second consumable product **505** to produce a second usage amount comparison.

The first time may be compared with the third time at Block **632** to determine whether the first consumable product **503** and the second consumable product **505** were used according to a recommended sequence to produce a sequence comparison. A workflow conformance analysis that may include the first usage amount comparison, the second usage amount comparison, and the sequence comparison may be reported at Block **634.** The method may end at Block **636.**

### Additional Examples / Combinations:

Example A: A device assembly comprising:
   a housing having upper and lower edge sections with a transition section therebetween, and with the upper edge section being recessed from the lower edge section;
   a bottom cover coupled to an underside of the housing;
   a top plate extends over a topside of the housing and overhangs a portion of the transition section of the housing, with the top plate to receive a consumable product and being movable with respect to the housing;
   a weight sensor positioned within an interior of the housing and contacting the top plate for collecting weight measurements during sample time periods;
   a controller coupled to the weight sensor and configured to execute at least one edge algorithm based on the collected weight measurements for each sample time period, with the at least one edge algorithm summarizing the weight measurements as a single edge algorithm output for each sample time period; and
   a communication module coupled to the controller and configured to transmit the single edge algorithm output for each sample time period.
Example A1: A device assembly comprising:
   a housing comprising an upper surface configured to receive a consumable product placed thereon;
   a weight sensor positioned within an interior of the housing and configured to collect weight measurements during sample time periods;
   at least one additional sensor within an interior of the housing and configured to collect raw sensor data during sample time periods, with the raw sensor data comprising a plurality of data points within each sample time period for each sensor;
   a controller coupled to the weight sensor and the at least one additional sensor, and configured to execute a plurality of edge algorithms based on the collected raw sensor data for each sample time period, with each edge algorithm summarizing the raw sensor data from at least one of the sensors as a single edge algorithm output; and
   a communication module coupled to the controller and configured to transmit the raw sensor data and the single edge algorithm outputs for each sample time period.
Example A2: The device assembly according to any of Examples A and A1, wherein the weight sensor comprises a load cell assembly.
Example A3: The device assembly according to any of Examples A-A2, wherein the communication module is configured as a Bluetooth communication module to transmit the raw sensor data and the single edge algorithm outputs to a gateway which then relays the raw sensor data and the single edge algorithm outputs to a cloud-based server.
Example A4: The device assembly according to any of Examples A-A3, wherein the communication module is configured as a cellular communication module to transmit the raw sensor data and the edge algorithm outputs to a cloud-based server.
Example A5: The device assembly according to any of Examples A-A4, wherein the communication module is configured to receive updates from a cloud-based server for the plurality of edge algorithms.
Example A6: The device assembly according to any of Examples A-A5, wherein the communication module is further configured to transmit the collected weight measurements with the single edge algorithm outputs.
Example A7: The device assembly according to any of Examples A-A6, wherein the load cell assembly comprises: a load cell; a load plate coupled to an upper surface of the load cell; and a bottom plate coupled to an underside of the load cell.
Example A8: The device assembly according to any of Examples A-A7, wherein the top plate is spring-loaded with respect to the weight sensor.
Example A9: The device assembly according to any of Examples A-A8, further comprising a switch between the weight sensor and the top plate, with the switch comprising an arm contacting an underside of the top plate.
Example A10: The device assembly according to any of Examples A-A9, wherein the switch is activated when the consumable product is removed from the top plate and the top plate no longer makes contact with the arm of the switch.
Example A11: The device assembly according to any of Examples A-A10, wherein a side edge of the top plate is recessed from the lower edge section of the housing.
Example A12: The device assembly according to any of Examples A-A11, wherein the communication module is configured as a Bluetooth communication module to transmit the single edge algorithm outputs to a gateway which then relays the single edge algorithm outputs to a cloud-based server.
Example A13: The device assembly according to any of Examples A-A12, wherein the communication module is configured as a cellular communication module to transmit the single edge algorithm outputs to a cloud-based server.
Example A14: The device assembly according to any of Examples A-A13, wherein the communication module is configured to receive updates from a cloud-based server for the at least one edge algorithm.
Example A15: The device assembly according to any of Examples A-A14, wherein the communication module is configured to receive at least one of firmware updates, cloud functions, time close updates.
Example B: A method of determining usage of a consumable product comprising:
   providing a device assembly;
   operating the device assembly with a consumable product placed thereon to perform the following:
      collect raw sensor data during sample time periods, with the raw sensor data comprising a plurality of data points within each sample time period for each sensor,
      execute a plurality of edge algorithms based on the collected raw sensor data for each sample time period, with each edge algorithm summarizing the raw sensor data from at least one of the sensors as a single edge algorithm output, and
      transmit the raw sensor data and the single edge algorithm outputs for each sample time period; and
      operating a server to perform the following:
         store the raw sensor data and the single edge algorithm outputs for each sample time period,
         analyze the single edge algorithm outputs for each sample time period to make a determination on the usage of the consumable product, and
         analyze the raw sensor data for each sample time period to evaluate confidence of the single edge algorithm outputs.
Example B1: A method for prompting a consumer on a recommended sequence of use for a plurality of consumable products comprising:
   providing a device assembly;
   detecting by the device assembly when a first consumable product is lifted off the device assembly indicating usage of the first consumable product;
   sending by the device assembly a first message to a survey app on a client device for providing directions to the consumer to use a second consumable product after use of the first consumable product;
   receiving by the device assembly sensor data from a sensor in the second consumable product to indicate usage of the second consumable product by the consumer;
   sending by the device assembly a second message to the survey app on the client device for providing directions to the consumer to use a third consumable product after use of the second consumable product;
   receiving by the device assembly sensor data from a sensor in the third consumable product to indicate usage of the third consumable product by the consumer; and
   sending a message by the device assembly to the survey app in the client device prompting the consumer to provide feedback on usage of the first, second and third consumable products.
Example B2: A method for detecting conformance with a recommended sequence of use for a plurality of consumable products, the method comprising:
   providing a first device assembly;
   detecting a first weight of a first consumable product package, the first consumable product package comprising a first consumable product and positioned on the first device assembly;
   detecting a first time at which the first consumable product package is lifted off the first device assembly indicating a usage of the first consumable product;
   detecting a second time at which the first consumable product package is returned to the first device assembly;
   detecting a second weight of the first consumable product package;
   calculating a first amount of the first consumable product consumed during the usage of the first consumable product based on the first weight and the second weight;
   comparing the first amount to a first recommended usage amount for the first consumable product to produce a first usage amount comparison;
   providing a second device assembly;
   detecting a third weight of a second consumable product package, the second consumable product package comprising a second consumable product and positioned on the second device assembly;
   detecting a third time at which the second consumable product package is lifted off the second device assembly indicating a usage of the second consumable product;
   detecting a fourth time at which the second consumable product package is returned to the second device assembly;
   detecting a fourth weight of the second consumable product package;
   calculating a second amount of the second consumable product consumed during the usage of the second consumable product based on the third weight and the fourth weight;
   comparing the second amount to a second recommended usage amount for the second consumable product to produce a second usage amount comparison;
   comparing the first time with the third time to determine whether the first consumable product and the second consumable product were used according to a recommended sequence to produce a sequence comparison; and
   reporting a workflow conformance analysis comprising the first usage amount comparison, the second usage amount comparison, and the sequence comparison.
Example B3: The method according to any of Examples B-B2, wherein the device assembly comprises at least one of a weight sensor, a temperature sensor and a battery sensor, wherein the raw sensor data collected by the temperature sensor and the battery sensor are used as indicators by the plurality of edge algorithms to determine if the raw sensor data collected by the weight sensor is to be discarded.
Example B4: The method according to any of Examples B-B3, wherein the plurality of edge algorithms comprises at least one secondary edge algorithm to assess statistical variances of the raw sensor data to determine if an error code is to be generated to create awareness of a problem.
Example B5: The method according to any of Examples B-B4, wherein each edge algorithm is configured to perform a mathematical calculation on the raw sensor data received for each sample time period to generate one of the single edge algorithm outputs.
Example B6: The method according to any of Examples B-B5, further comprising sending updates by the server to the plurality of edge algorithms based on the analyzed raw sensor data to improve confidence of the single edge algorithm outputs.
Example B7: The method according to any of Examples B-B6, further comprising communicating by the device assembly to a client device comprising a survey app including pre-deployed survey questions, with the pre-deployed survey questions being triggered by the device assembly in response to at least one of the edge algorithm outputs satisfying specific criteria, such as a weight change in the consumable product.
Example B8: The method according to Example B7, wherein the survey app includes pre-deployed survey questions to generate the feedback, with the pre-deployed survey questions being triggered by the message received from the device assembly.
Example B9: The method according to Example B8, wherein the feedback from the consumer is received by the device assembly, and further comprising the device assembly forwarding the feedback to a server for processing.
Example B10: The method according to any of Examples B-B9, wherein the device assembly generates time stamps corresponding to when the first, second and third consumable products are used.
Example B11: The method according to Examples B2-B10, wherein the first, second and third consumable products comprise at least one of laundry products, bath products and cleaning products.
Example B12: The method of any of Examples B2-B11, further comprising sending a survey to a consumer of the first and second consumable products, with the consumer taking the survey.
Example B13: The method of any of Examples B2-B12, further comprising associating a level of consumer satisfaction indicated in the survey with the workflow conformance analysis.
Example B14: The method of any of Examples B2-B13, wherein the first device assembly associates time stamps with usage of the first consumable product, and the second device assembly associates time stamps with usage of the second consumable product, with the time steps being included in the workflow conformance analysis.
Example B15: The method of any of Examples B2-B14, further comprising: communicating by the first device assembly the detected first and second weights to a server, wherein the server performs the calculating of the first amount of the first consumable product consumed and produces the first usage amount comparison;
   communicating by the second device assembly the detected third and fourth weights to the server, wherein the server performs the calculating of the second amount of the first consumable product consumed and produces the second usage amount comparison; and
   wherein the server produces the workflow conformance analysis
Example B16: The method of any of Examples B2-B15, wherein the first and second consumable products comprise at least one of laundry products, bath products and cleaning products.
Example B17: The method of any of Examples B-B16, wherein data from the temperatures sensor are utilized to calibrate the weight sensor.

### Further Definitions and Cross-References

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. A system for determining usage of a consumable product comprising:
a device assembly configured to receive the consumable product when placed thereon, and comprising:
one or more sensors configured to collect raw sensor data during sample time periods, with the raw sensor data comprising a plurality of data points within each sample time period for each sensor,
a controller coupled to the one or more sensors and configured to execute a plurality of edge algorithms based on the collected raw sensor data for each sample time period, with each edge algorithm summarizing the raw sensor data from at least one of the one or more sensors as a single edge algorithm output, and
a communication module coupled to the controller and configured to transmit the raw sensor data and the single edge algorithm outputs for each sample time period; and
a server comprising:
a memory configured to store the raw sensor data and the single edge algorithm outputs for each sample time period, and
a processor coupled to the memory and configured to perform the following:
make a determination on the usage of the consumable product based on the single edge algorithm outputs for each sample time period, and
analyze the raw sensor data for each sample time period to evaluate confidence of the single edge algorithm outputs.

2. The system according to claim 1 wherein the device assembly comprises a power source, and the one or more sensors comprises at least one of a weight sensor, a temperature sensor and a battery sensor.

3. The system according to any of the preceding claims, wherein the power source comprises at least one of: a replaceable battery, a rechargeable battery, a power cord with a plug.

4. The system according to claim 3, wherein the device assembly further comprises an antenna and charges the rechargeable battery via capturing radio frequency signals from an ambient environment.

5. The system according to any of the preceding claims, wherein device assembly further comprises a temperature sensor and a battery sensor, and wherein the raw sensor data collected by the temperature sensor and the battery sensor are used as indicators by the plurality of edge algorithms to determine if the raw sensor data collected by the weight sensor is to be discarded.

6. The system according to any of the preceding claims, wherein the plurality of edge algorithms comprise at least one secondary edge algorithm to assess statistical variances of the raw sensor data to determine if an error code is to be generated to create awareness of a problem.

7. The system according to any of the preceding claims, wherein each edge algorithm is configured to perform a mathematical calculation on the raw sensor data received for each sample time period to generate at least one of the single edge algorithm outputs.

8. The system according to claim 7 wherein the mathematical calculation comprises at least one of determining a delta from a previous measurement, an average of measurements during the sample time period, and a sigma average that is a standard deviation of a last measurement.

9. The system according to any of the preceding claims, wherein the plurality of edge algorithms comprise at least one of the following:
a weight delta analysis model to determine a change in weight of the consumable product from a previous measurement;
a weight average model to determine an average of the weight measurements during each sample time period;
a sigma weight average model to determine a standard deviation of a last measurement; and
a tare weight model to determine a weight value when the consumable product is removed from the device assembly.

10. The system according to any of the preceding claims, wherein the plurality of sensors further comprise a motion sensor, and wherein the plurality of edge algorithms further comprise a motion threshold model to determine if a motion limit value of the device assembly has been exceeded.

11. The system according to any of the preceding claims, wherein the server is configured to send updates to the plurality of edge algorithms based on the analyzed raw sensor data to improve confidence of the single edge algorithm outputs.

12. The system according to claim 11 wherein the device assembly comprises at least one memory with first and second memory sections, with the first memory sections to store the plurality of edge algorithms and the second memory sections to store the updated plurality of edge algorithms, and wherein the controller is further configured to verify operation of the plurality of updated edge algorithms in the second memory sections before using the updated edge algorithms.

13. The system according to any of the preceding claims, further comprising a gateway configured to perform the following:
receive the raw sensor data and the single edge algorithm outputs from the device assembly; and
transmit the received raw sensor data and the single edge algorithm outputs to the server.

14. The system according to any of the preceding claims, wherein the device assembly further comprises a communication module configured to transmit the raw sensor data and the single edge algorithm outputs directly to the server.

15. The system according to any of the preceding claims, wherein the device assembly is further configured to communicate with a client device comprising a survey app including pre-deployed survey questions, with the pre-deployed survey questions being triggered by the device assembly in response to at least one of the edge algorithm outputs satisfying specific criteria, such as a weight change in the consumable product.

16. The system according to any of the preceding claims, wherein the server is further configured to transmit at least one survey question to a client device in response to at least one of the edge algorithm outputs satisfying specific criteria, such as a weight change in the consumable product.

17. The system according to any of the preceding claims, wherein the device assembly further comprises a top plate forming a top surface and a load plate positioned subjacent to the top plate and a switch positioned between the top plate and the load plate, wherein the switch is configured to detect the placement and removal of the consumable product from the top surface.
